# EUROPEAN PATENT APPLICATION

(11) **EP 4 414 206 A1**
(43) Date of publication of application: **14.08.2024**
(21) Application number: 21958598.1
(22) Date of filing: 28.09.2021
(51) Int. Cl.: B60L 50/60, B60L 58/26

(54) **VEHICLE POWER SUPPLY SYSTEM**

(71) Applicant: NISSAN MOTOR CO., LTD., Kanagawa 221-0023 (JP)
(72) Inventor: MORI Junichi, Atsugi-shi, Kanagawa 243-0123 (JP); SHIMADA Toshiyuki, Atsugi-shi, Kanagawa 243-0123 (JP); KASEDO Kohei, Atsugi-shi, Kanagawa 243-0123 (JP)
(74) Representative: Osha BWB
(86) International application number: PCT/JP2021/035641
(87) International publication number: WO 2023/053206

(57) **Abstract**

A vehicle power supply system (1) includes a battery pack (20) arranged below a pair of right and left front seats (2), and a service disconnect switch (30) arranged below one front seat (2) of the pair of right and left front seats (2). The vehicle power supply system (1) includes a DC/DC converter (50) arranged in front of the battery pack (20), and a cooling fan (40) arranged above the battery pack (20) and between the pair of right and left front seats (2).

## Description

### TECHNICAL FIELD

The present invention relates to a vehicle power supply system.

### BACKGROUND ART

Conventionally, a power supply system provided in a passenger compartment of an automobile and the like has been known (See, for example, Patent Literature 1). In this Patent Literature 1, a battery pack is arranged below a front seat, a fan is arranged in front of the battery pack and below the front seat, and a cooling duct is connected between the fan and the battery pack.

### CITATION LIST

### PATENT LITERATURE

Patent Literature 1: Japanese Patent Application Publication No. 2011-63042

### SUMMARY OF INVENTION

### TECHNICAL PROBLEM

When a large battery pack having a high capacity is arranged with a fan below the front seat, a part of the battery pack may protrude to a rear seat side. Furthermore, when a battery pack is arranged to fit below the front seat, the fan may be forced to protrude to the rear seat side. If the components of the vehicle power supply system are arranged to protrude to the rear seat side, the rear seat side will have less space.

The present invention has been made in view of the above problems, and an object of the present invention is to arrange components constituting a vehicle power supply system under the floor without narrowing the space on the rear seat side.

### TECHNICAL SOLUTION

A vehicle power supply system according to one aspect of the present invention includes a battery pack arranged below a pair of left and right front seats. A fan is arranged above the battery pack and between the pair of left and right front seats.

Furthermore, the vehicle power supply system according to one aspect of the present invention includes a battery pack arranged below the pair of left and right front seats and a service disconnect switch arranged below one of the pair of left and right front seats. A converter is arranged in front of the battery pack and a fan is arranged above the battery pack and between the pair of left and right front seats. The battery pack and the fan are connected by a first duct, and the converter and the fan are connected by a second duct.

### ADVANTAGEOUS EFFECTS

According to the present invention, components constituting a vehicle power supply system can be arranged under the floor without narrowing the space on the rear seat side.

### BRIEF DESCRIPTION OF DRAWINGS

[FIG. 1] FIG. 1 is a side sectional view of a vehicle power supply system according to an embodiment of the present invention.
[FIG. 2] FIG. 2 is a schematic plan view of a battery pack shown in FIG. 1.
[FIG. 3] FIG. 3 is a schematic view showing an electrical connection between a battery inside a battery pack and a service disconnect switch.
[FIG. 4] FIG. 4 is a schematic perspective view of the battery pack.
[FIG. 5] FIG. 5 is a schematic perspective view showing an internal structure of a battery pack.
[FIG. 6] FIG. 6 is a side sectional view of a vehicle power supply system according to another embodiment of the present invention.

### DESCRIPTION OF EMBODIMENTS

Embodiments will be described with reference to the drawings. In the description of the drawings, the same reference numerals are given to the same parts, and description thereof will be omitted.

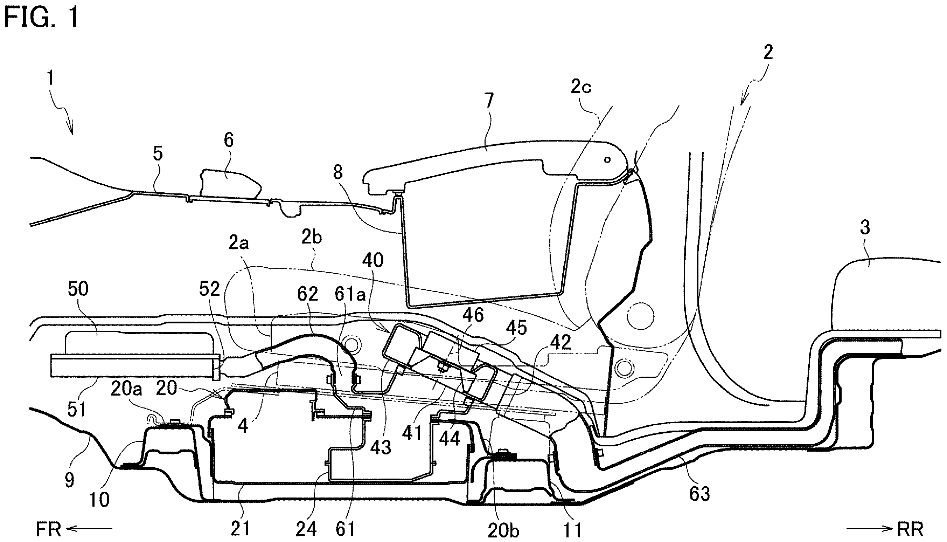

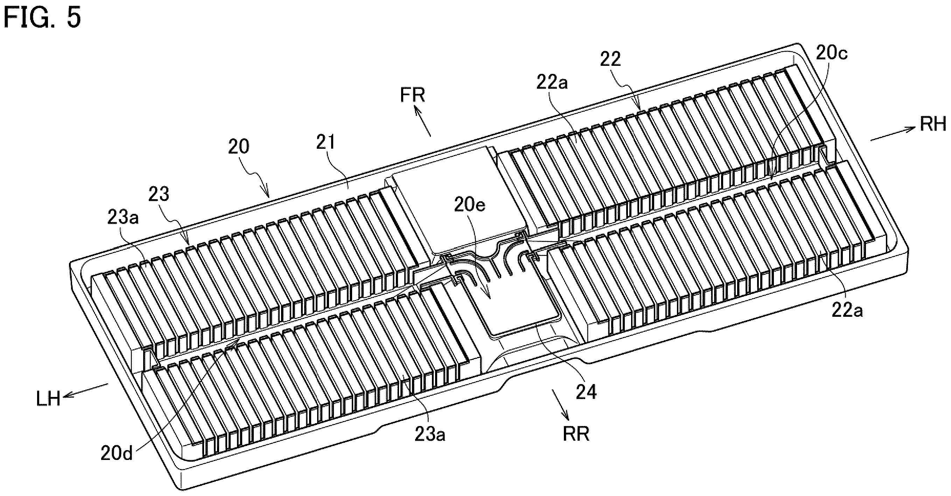

A structure of a vehicle power supply system 1 according to the present embodiment will be described with reference to FIGS. 1 to 5. In the drawings, a front side of a vehicle is indicated as FR, a rear side of the vehicle is indicated as RR, a right side in a vehicle width direction is indicated as RH, and a left side in the vehicle width direction is indicated as LH.

The vehicle power supply system 1 is applied to a vehicle with a so-called left-hand-drive. In a vehicle with a left-hand drive, a steering wheel (not shown) and a driver's seat are arranged in a left part of a passenger compartment, and a front passenger seat is arranged in a right part of the passenger compartment.

In one embodiment, the vehicle power supply system 1 may be applied to a so-called right-hand-drive vehicle. In a right-hand-drive vehicle, the steering wheel (not shown) and driver's seat are located in the right part of the passenger compartment, and the front passenger seat is located in the left part of the passenger compartment.

As shown in FIG. 1, a pair of right and left front seats 2 are arranged in a front part of the passenger compartment, and a rear seat 3 is arranged in a rear part of the passenger compartment. Specifically, a front seat 2 arranged in the driver's seat on a left side in a vehicle width direction and a front seat 2 arranged in the front passenger seat on a right side in the vehicle width direction are arranged in the front part of the passenger compartment.

Each front seat 2 has a seat frame 2a that slides on a seat rail 4 in a vehicle longitudinal direction. Furthermore, each front seat 2 has a seat cushion 2b arranged on a seat surface part of the seat frame 2a and a seat back 2c arranged on a backrest part of the seat frame 2a.

A center console 5 is arranged between a pair of right and left front seats 2. A shift knob 6, an armrest 7 and the like are arranged on the upper part of the center console 5. Furthermore, a console box 8 is received inside the center console 5.

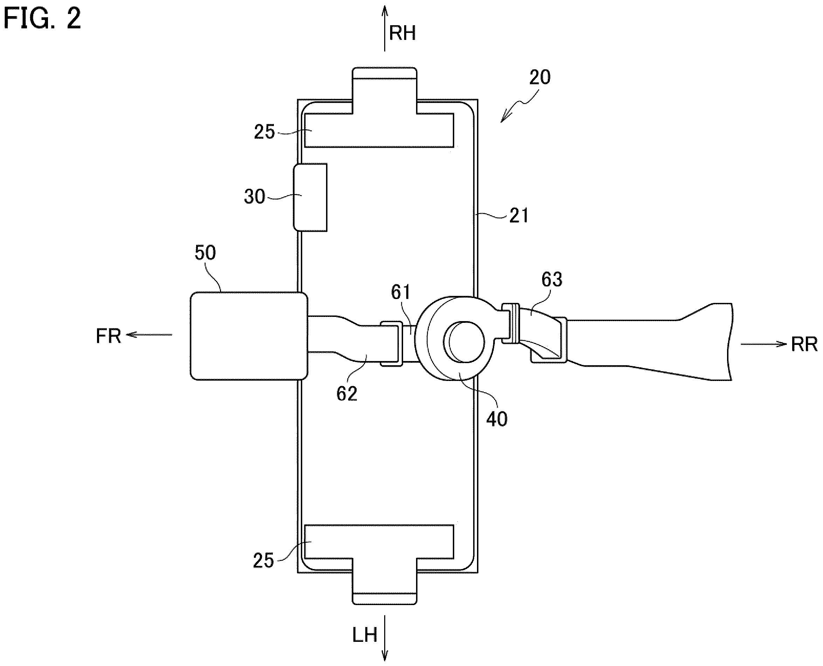

As shown in FIGS. 1 and 2, a battery pack 20 (strong-power battery) extending in the vehicle width direction from the front seat 2 side (driver's side) on the left side in the vehicle width direction to the front seat 2 side (passenger's side) on the right side in the vehicle width direction is arranged on the floor panel 9. A horizontally long battery pack 20 extending from a bottom of the front seat 2 (driver's side) on the left side in the vehicle width direction through the center console 5 to a bottom of the front seat 2 (passenger's side) on the right side in the vehicle width direction is arranged. That is, the battery pack 20 is arranged below two adjacent front seats 2 in the vehicle width direction.

In front of the battery pack 20, a front cross member 10 extends in the vehicle width direction. A front coupling part 20a is provided in front of the battery pack 20, and the front coupling part 20a is coupled to the front cross member 10. On the other hand, a rear cross member 11 extends behind the battery pack 20 in the vehicle width direction. A rear coupling part 20b is provided at a rear of the battery pack 20, and the rear coupling portion 20b is coupled to the rear cross member 11.

As shown in FIG. 2, a service disconnect switch (hereinafter also referred to as "SD switch") 30 is arranged below the front seat 2 (front passenger seat) on the right side in the vehicle width direction. Specifically, the SD switch 30 is arranged below the front seat 2 on the right side in the vehicle width direction on an upper surface of the battery pack 20.

The SD switch 30 is for blocking a voltage circuit of the battery pack 20. A fuse of a high voltage circuit can be manually blocked by unplugging a plug inserted in the SD switch 30 as an emergency measure such as when a hood of a motor room with a fuse box for blocking a high voltage power supply cannot be opened.

In one embodiment, the vehicle power supply system 1 may be applied to the right-hand-drive vehicle so that the SD switch 30 is arranged below the front seat 2 (front passenger seat) on the left side in the vehicle width direction. In this case, the SD switch 30 can be arranged at a position below the front seat 2 on the left side in the vehicle width direction on the upper surface of the battery pack 20.

As shown in FIGS. 2 to 5, the battery pack 20 has a battery case 21. A first battery group 22 is arranged in a position below the front seat 2 (front passenger seat) on the right side in the vehicle width direction inside the battery case 21. On the other hand, a second battery group 23 is arranged in a position below the front seat 2 (driver's seat) on the left side in the vehicle width direction inside the battery case 21.

The first battery group 22 includes a plurality of first batteries 22a that are electrically connected. The plurality of first batteries 22a having a substantially rectangular shape is arranged vertically, and the first batteries 22a are electrically connected in series or parallel. Furthermore, the first batteries 22a are arranged in two rows on a front side and a rear side in the longitudinal direction of the vehicle, and a first flow passage 20c, which is a flow passage for cooling air, is formed between the first batteries 22a on the front row and the first batteries 22a on the rear row inside the battery case 21.

The second battery group 23 includes a plurality of second batteries 23a that are electrically connected. The plurality of second batteries 23a having a substantially rectangular shape is arranged vertically, and the second batteries 23a are electrically connected in series or parallel. Furthermore, the second batteries 23a are arranged in two rows on a front side and a rear side in the longitudinal direction of the vehicle, and a second flow passage 20d, which is a flow passage for cooling air, is formed between the second batteries 23a on the front row and the second batteries 23a on the rear row inside the battery case 21.

Further, a confluent flow passage 20e, in which a downstream end of the first flow passage 20c and a downstream end of the second flow passage 20d meet, is formed between the first battery group 22 and the second battery group 23 inside the battery case 21 (at a center position in the vehicle width direction). An internal duct 24 is arranged in the battery case 21, and the confluent flow passage 20e is formed by the internal duct 24.

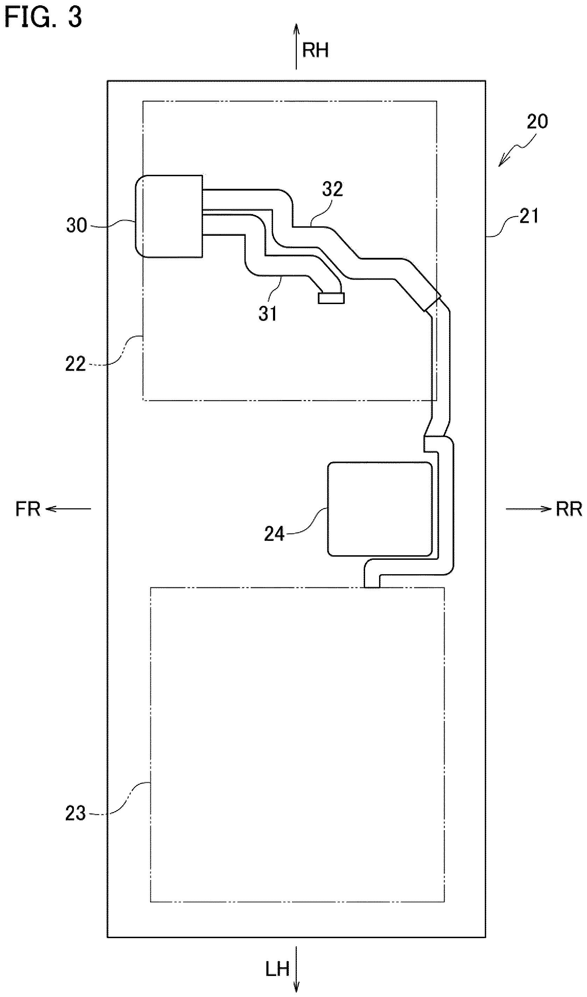

The SD switch 30 and the first battery group 22 are electrically connected by a first bus bar 31 as a first electric wire (see FIG. 3). That is, the first battery group 22 arranged below the front seat 2 (front passenger seat) on the right side in the vehicle width direction is connected to the SD switch 30 through the first bus bar 31.

In one embodiment, an electrical wire (conductor) other than a bus bar may be used to connect the SD switch 30 to the first battery group 22.

On the other hand, the SD switch 30 and the second battery group 23 are electrically connected by a second bus bar 32 as a second electrical wire (see FIG. 3). That is, the second battery group 23 arranged below the front seat 2 (driver's seat) on the left side in the vehicle width direction is connected to the SD switch 30 through the second bus bar 32.

In one embodiment, an electric wire (conductor) other than a bus bar may be used to connect the SD switch 30 and the second battery group 23 as in the first battery group 22.

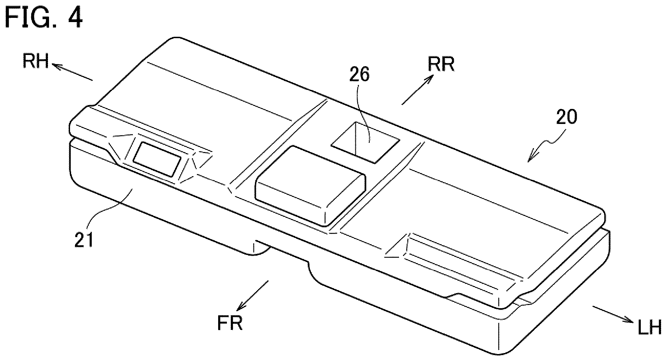

Battery ducts 25 are arranged at both ends of the battery pack 20 in the vehicle width direction (see FIG. 2). These battery ducts 25 have a suction opening (not shown) opened downward. On the other hand, an opening 26 for discharging cooling air is provided at a central position in the vehicle width direction on the upper surface of the battery pack 20 (see FIG. 4). In one embodiment, the suction opening of the battery duct 25 may open sideways or upward.

By driving a cooling fan 40 described below, air outside the battery pack 20 is introduced into the battery pack 20 as cooling air. Specifically, the cooling air is taken into the inside the battery case 21 from the battery duct 25 on the right side in the vehicle width direction, and is discharged from a discharge opening 26 to the outside of the battery case 21 through the first flow passage 20c on the right side in the vehicle width direction and the confluent flow passage 20e in the center in the vehicle width direction. Furthermore, the cooling air is also taken into the battery case 21 from the battery duct 25 on the left side in the vehicle width direction, and is discharged from the discharge opening 26 to the outside of the battery case 21 through the second flow passage 20d on the left side in the vehicle width direction and the confluent flow passage 20e in the center in the vehicle width direction.

As shown in FIGS. 1 and 2, the cooling fan 40 is arranged at a position directly above the battery pack 20 and between the pair of left and right front seats 2. The cooling fan 40 is a centrifugal fan having a scroll casing 43 with a suction opening 41 opened downward and a discharge opening 42 opened rearward, a rotor blade 44 arranged inside the scroll casing 43, and a motor 45 for driving the rotor blade 44 to rotate.

In one embodiment, the front seats 2 and the cooling fan 40 may be arranged to overlap in the vehicle width direction. Thus, the cooling fan 40 can be arranged between the pair of right and left front seats 2.

In another embodiment, in order to arrange the cooling fan 40 between the pair of right and left front seats 2, the cooling fan 40 may be arranged so that the entire cooling fan 40 is contained in the contour of the front seats 2 in the vehicle width direction.

The cooling fan 40 is arranged so that a rotation axis 46 of the rotor blade 44 is inclined rearward. "Inclined rearward" means that an inclination is given such that an upper part of the rotation axis 46 is located rearward in the longitudinal direction of the vehicle relative to a lower part of the rotation axis 46.

An opening 26 for discharging cooling air is provided on the upper surface of the battery pack 20, and a cooling fan 40 is arranged so that an extension line of the rotation axis 46 of the rotor blade 44 passes through the opening 26.

In one embodiment, the cooling fan 40 may be arranged so that the entire motor 45 of the cooling fan 40 overlaps the battery pack 20 in a plan view. As a result, the cooling fan 40 can be arranged just above the battery pack 20.

In another embodiment, in order to arrange the cooling fan 40 just above the battery pack 20, the cooling fan 40 may be arranged so that an extension line of the rotation axis 46 of the rotor blade 44 passes through the upper surface of the battery pack 20.

Furthermore, a DC/DC converter 50 is arranged in a position in front of the battery pack 20. A holding bracket (not shown) is coupled to an upper side of the battery pack 20, and the holding bracket holds the DC/DC converter 50 at the battery pack 20.

A DC/DC converter 50 having a substantially rectangular shape is arranged. The DC/DC converter 50 that is horizontally arranged has a suction opening 51 opened downward and a discharge opening 52 opened rearward.

The DC/DC converter 50 is an apparatus for converting DC power into DC power, and has a function of changing a voltage. The DC/DC converter 50 according to the present embodiment is a step-down converter, and the power from the battery pack 20, which is a high-power battery, is stepped down by the DC/DC converter 50 to weaken the power, thereby supplying power to a low-power battery (so-called 12V battery).

In the present embodiment, the DC/DC converter 50 is arranged so that a rearmost part of the DC/DC converter 50 is positioned in front of a front-most part of a seat back 2c.

Furthermore, in the present embodiment, the DC/DC converter 50 is arranged so that the front-most part of the DC/DC converter 50 is positioned in front of the front-most part of the battery pack 20.

In one embodiment, the DC/DC converter 50 may be arranged so that the rearmost part of the DC/DC converter 50 is positioned in front of the front-most part of the battery pack 20. This allows the DC/DC converter 50 to be positioned in front of the battery pack 20.

Furthermore, the DC/DC converter 50 is arranged in front of the cooling fan 40 in line with the cooling fan 40 in the longitudinal direction of the vehicle. Therefore, the DC/DC converter 50 is arranged in an area of the center console 5 (a center position in the vehicle width direction).

In one embodiment, the cooling fan 40 may be arranged to be in line with the DC/DC converter 50 at the same height level. This allows the DC/DC converter 50 to be arranged to be in line with the cooling fan 40 in the longitudinal direction of the vehicle.

In another embodiment, in order to arrange the DC/DC converter 50 to be in line with the cooling fan 40 in the longitudinal direction of the vehicle, the cooling fan 40 and the DC/DC converter 50 may be arranged to at least partially overlap in the longitudinal direction of the vehicle.

In still another embodiment, an uppermost part of the DC/DC converter 50 may be arranged to be lower than an uppermost part of the cooling fan 40 and a lowermost part of the DC/DC converter 50 to be higher than a lowermost part of the cooling fan 40. This allows the DC/DC converter 50 to be arranged in line with the cooling fan 40 in the longitudinal direction of the vehicle.

A cooling duct (first duct 61) is arranged between the battery pack 20 and the cooling fan 40, and a cooling duct (second duct 62) is arranged between the DC/DC converter 50 and the cooling fan 40. Specifically, the first duct is connected between the opening 26 of the battery pack 20 for discharging and the suction opening 41 of the cooling fan 40, and the second duct 62 is connected between the discharge opening 52 of the DC/DC converter 50 and a connection opening 61a of the first duct 61.

By driving the cooling fan 40, air outside the battery pack 20 is introduced into the battery pack 20 as cooling air, and air outside the DC/DC converter 50 is introduced into the DC/DC converter 50 as cooling air.

On the other hand, an exhaust duct 63 is connected to the discharge opening 42 of the cooling fan 40. The exhaust duct 63 extends rearward through both sides of the trunk room in the vehicle width direction to exhaust air from the cooling fan 40 to the outside of the passenger compartment.

The operation effect according to this embodiment will be described below.

(1) A vehicle power supply system 1 includes a battery pack 20 arranged below two front seats 2 adjacent to each other in a vehicle width direction. Furthermore, the vehicle power supply system 1 includes a fan (cooling fan 40) arranged above the battery pack 20 and between the two front seats 2 to introduce air outside the battery pack 20 into the battery pack 20.

A mounting space of the cooling fan 40 and front and rear spaces of the battery pack 20 can be secured. Therefore, the battery pack 20 can be arranged to fit under the front seat 2 and the cooling fan 40 can be arranged not to protrude to the rear seat 3 side.

In addition, the length of the cooling duct (first duct 61) connected between the battery pack 20 and the cooling fan 40 can be shortened. Therefore, the pressure loss of cooling air caused by the length of the first duct 61 can be suppressed, and the cooling efficiency of the battery pack 20 can be improved.

(2) The vehicle power supply system 1 includes a converter (DC/DC converter 50) arranged in front of the cooling fan 40 in line with the cooling fan 40 in a longitudinal direction of the vehicle.

The path of the second duct 62 can be arranged linearly in a plan view by eliminating a right-angled part of the cooling duct (second duct 62) connected between the DC/DC converter 50 and the cooling fan 40. The pressure loss of cooling air due to the shape of the second duct 62 can be suppressed, and the cooling efficiency of the DC/DC converter 50 can be improved.

(3) The DC/DC converter 50 is arranged in front of the battery pack 20.

When the DC/DC converter 50 is arranged below the console box 8 and between the two front seats 2, the capacity of the console box 8 may have to be reduced to allow space for the DC/DC converter 50. By arranging the DC/DC converter 50 in front of the battery pack 20, the capacity of the console box 8 can be increased compared to arranging the DC/DC converter 50 below the console box 8 and between the two front seats 2.

By arranging the DC/DC converter 50 in front of the battery pack 20, the DC/DC converter 50 is positioned in a front part of the vehicle relative to the two front seats 2. Even if the seat frame 2a of the front seat 2 intrudes into the center of the vehicle width direction during a vehicle collision (side impact), interference between the seat frame 2a and the DC/DC converter 50 can be avoided.

(4) The vehicle power supply system 1 includes a service disconnect switch (SD switch) 30 arranged below one of the two front seats 2 and blocking a voltage circuit of the battery pack 20.

The SD switch 30 is conventionally arranged, for example, in a region (approximately in a center position of the vehicle width direction) between the first battery group 22 arranged below one of the two front seats 2 and the second battery group 23 arranged below the other front seat 2. By arranging the SD switch 30 below one of the two front seats 2 (front passenger seat), the SD switch 30 can be easily accessed from the outside of the vehicle in comparison with the case where the SD switch 30 is arranged approximately in the center position in the vehicle width direction.

(5) The vehicle power supply system 1 includes a first battery group 22 arranged below the one of the front seats 2 in the battery pack 20 and including a plurality of first batteries 22a that are electrically connected. The vehicle power supply system 1 includes a second battery group 23 arranged below the other front seat 2 in the battery pack 20 and including a plurality of second batteries 23a that are electrically connected. Furthermore, the vehicle power supply system 1 includes a first electric wire (first bus bar 31) that electrically connects the SD switch 30 and the first battery group 22, and a second electric wire (second bus bar 32) that electrically connects the SD switch 30 and the second battery group 23.

The SD switch 30 can be arranged at a foot position of the front seat 2 (front passenger seat) separated from an area (center console 5) between the first battery group 22 and the second battery group 23.

Furthermore, it is not necessary to provide an opening to access the SD switch 30 on a side surface of the center console 5, and a good appearance and rigidity can be provided to the center console 5.

(6) The cooling fan 40 has a casing (scroll casing 43) with a suction opening 41 opened downward and a discharge opening 42 opened rearward, and a rotary blade 44 arranged inside the scroll casing 43. The cooling fan 40 is arranged so that the rotation axis 46 of the rotary blade 44 is inclined rearward.

The cooling fan 40 (centrifugal fan) is arranged to be inclined rearward, so that the discharge opening 42 of the cooling fan 40 is close to an underfloor side. Therefore, the length of the exhaust duct 63 behind the cooling fan 40 can be shortened.

Furthermore, a space is formed between the suction opening 41 of the cooling fan 40 (centrifugal fan) and the upper surface of the battery pack 20. A cooling duct (second duct 62) connected between the DC/DC converter 50 and the cooling fan 40 can be connected to this space.

(7) The vehicle power supply system 1 includes a battery pack 20 arranged below two front seats 2 adjacent to each other in a vehicle width direction, and a service disconnect switch (SD switch) 30 arranged below one of the two front seats 2. Furthermore, the vehicle power supply system 1 includes a converter (DC/DC converter 50) arranged in front of the battery pack 20, and a fan (cooling fan 40) arranged above the battery pack 20 and between the two front seats 2. Moreover, the vehicle power supply system 1 includes a cooling duct (first duct 61) connected between the battery pack 20 and the cooling fan 40, and a cooling duct (second duct 62) connected between the DC/DC converter 50 and the cooling fan 40.

By arranging the SD switch 30 below one of the two front seats 2 (front passenger seat), the cooling fan 40 and the cooling duct (First duct 61, second duct 62) can be mounted on the upper surface of the battery pack 20.

The mounting space of the cooling fan 40 and the cooling duct (First duct 61, second duct 62) can be secured, and the space around the battery pack 20 can be secured. Therefore, the battery pack 20 can be arranged to fit under the front seat 2, and the cooling fan 40 can be arranged not to protrude to the rear seat 3 side.

Although embodiments of the present invention have been described as described above, it should not be understood that the description and drawings that form part of this disclosure limit the present invention. The present disclosure will reveal to those skilled in the art a variety of alternative embodiments, variations, and operational techniques.

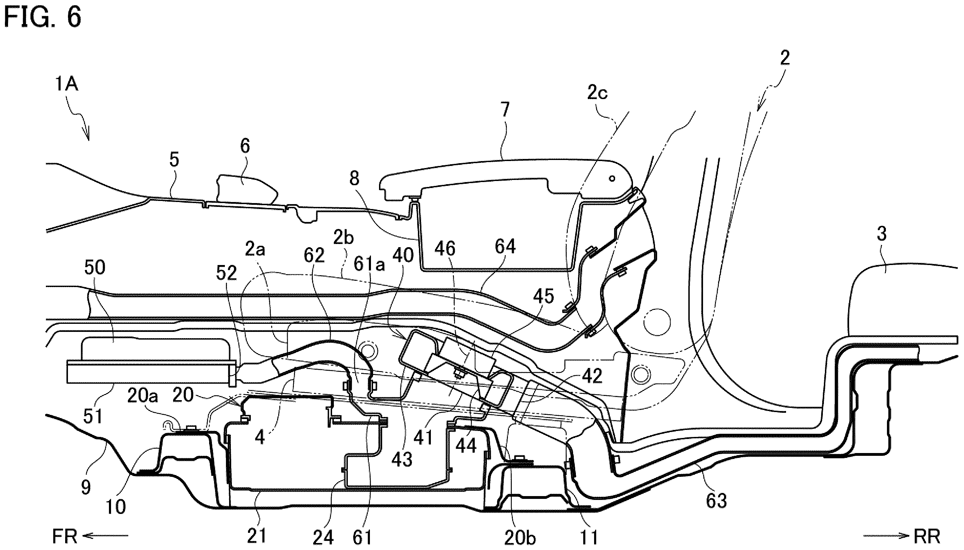

For example, as in the vehicle power supply system 1A shown in FIG. 6, a space may be formed in the vertical position between the console box 8 and the cooling fan 40, and an air conditioning duct 64 for the rear seat 3 may be placed in this space. That is, by arranging the SD switch 30 at the foot position of the front seat 2 (front passenger seat) separated from the center console 5, it is possible to form a space for the air conditioning duct 64 in the console box 8.

### REFERENCE SIGNS LIST

- 1, 1A: Vehicle power supply system
- 2: Front seat
- 20: Battery pack
- 22: First battery group
- 22a: First battery
- 23: Second battery group
- 23a: second battery
- 30: SD switch (Service disconnect switch)
- 31: First bus bar (First electric wire)
- 32: Second bus bar (Second electric wire)
- 40: Cooling fan
- 41: Suction opening
- 42: Discharge opening
- 43: Scroll casing (Casing)
- 44: Rotating blade
- 50: DC/DC Converter (Converter)
- 61: First Duct (Cooling Duct)
- 62: Second Duct (Cooling Duct)

## Claims

1. A vehicle power supply system comprising:
a battery pack arranged below two front seats adjacent to each other in a vehicle width direction, and
a fan arranged above the battery pack and between the two front seats to introduce air outside the battery pack into the battery pack.

2. The vehicle power supply system according to claim 1, comprising a converter arranged in front of the fan in line with the fan in a longitudinal direction of the vehicle.

3. The vehicle power supply system according to claim 2, wherein the converter is arranged in front of the battery pack.

4. The vehicle power supply system according to any one of claims 1 to 3, comprising a service disconnect switch arranged below one of the two front seats and blocking a voltage circuit of the battery pack.

5. The vehicle power supply system according to claim 4, comprising:
a first battery group arranged below the one of the front seats in the battery pack and including a plurality of first batteries that are electrically connected,
a second battery group arranged below the other front seat in the battery pack and including a plurality of second batteries that are electrically connected,
a first electric wire that electrically connects the service disconnect switch and the first battery group, and
a second electric wire that electrically connects the service disconnect switch and the second battery group.

6. The vehicle power supply system according to any one of claims 1 to 5,
wherein the fan has a casing with a suction opening opened downward and a discharge opening opened rearward, and a rotary blade arranged inside the casing, and
wherein the fan is arranged so that a rotation axis of the rotary blade is inclined rearward.

7. A vehicle power supply system comprising:
a battery pack arranged below two front seats adjacent to each other in a vehicle width direction,
a service disconnect switch arranged below one of the two front seats,
a converter arranged in front of the battery pack,
a fan arranged above the battery pack and between the two front seats,
a first duct connected between the battery pack and the fan, and
a second duct connected between the converter and the fan.
